(19) Europäisches Patentamt / European Patent Office / Office européen des brevets

(11) **EP 3 149 313 B1**

(12) **FASCICULE DE BREVET EUROPEEN**

(45) Date de publication et mention
de la délivrance du brevet:
**27.02.2019 Bulletin 2019/09**

(21) Numéro de dépôt: **15728055.3**

(22) Date de dépôt: **13.05.2015**

(51) Int Cl.:
*F02C 9/26* *(2006.01)*    *F04D 27/00* *(2006.01)*
*F02C 9/28* *(2006.01)*    *G01F 9/00* *(2006.01)*

(86) Numéro de dépôt international:
**PCT/FR2015/051256**

(87) Numéro de publication internationale:
**WO 2015/181463 (03.12.2015 Gazette 2015/48)**

(54) **PROCÉDÉ ET DISPOSITIF DE CONTRÔLE D'UNE POUSSÉE D'UN TURBORÉACTEUR**

VERFAHREN UND VORRICHTUNG ZUR STEUERUNG EINER SCHUBKRAFT EINES
STRAHLTRIEBWERKS

METHOD AND DEVICE FOR CONTROL OF A THRUST OF A TURBOJET ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.05.2014 FR 1454762**

(43) Date de publication de la demande:
**05.04.2017 Bulletin 2017/14**

(73) Titulaire: **SAFRAN AIRCRAFT ENGINES
75015 Paris (FR)**

(72) Inventeurs:
• **OLIVIER, Amaury
77550 Moissy-Cramayel Cedex (FR)**

• **JAVELOT, Christophe
77550 Moissy-Cramayel Cedex (FR)**
• **MCGRATH, Darragh
77550 Moissy-Cramayel Cedex (FR)**

(74) Mandataire: **Cabinet Beau de Loménie
158, rue de l'Université
75340 Paris Cedex 07 (FR)**

(56) Documents cités:
**EP-A1- 1 908 927    FR-A1- 2 992 355
FR-A1- 2 998 004**

**EP 3 149 313 B1**

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**Description**

Arrière-plan de l'invention

L'invention concerne le domaine général de l'aéronautique.

Elle concerne plus particulièrement le contrôle de la poussée au ralenti d'un turboréacteur équipant un aéronef, tel que par exemple un turboréacteur double corps double flux équipé d'un compresseur basse pression et haute. La poussée du turboréacteur résulte de l'accélération d'une certaine quantité d'air entre l'entrée et la sortie du compresseur.

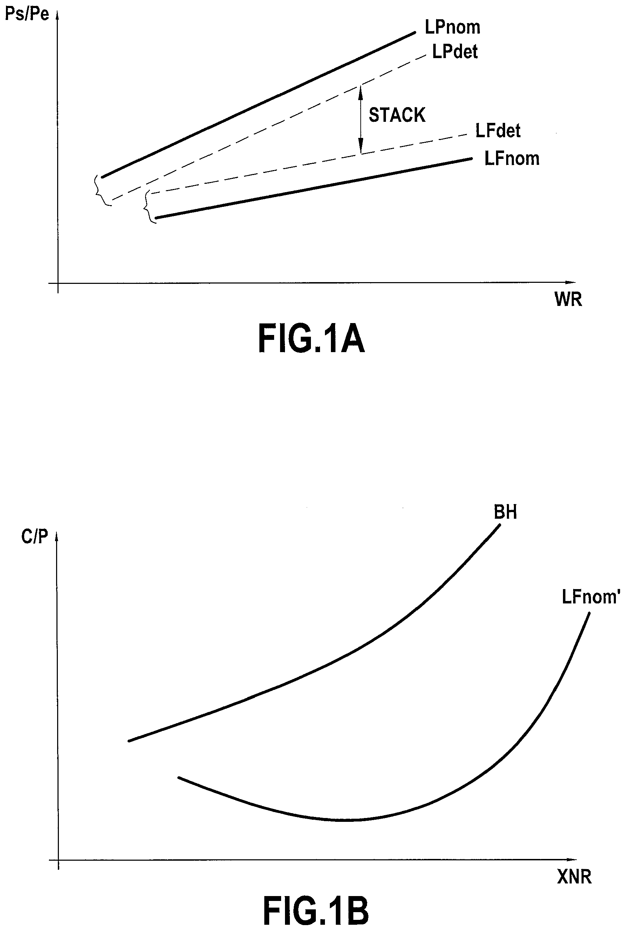

De façon connue, le point de fonctionnement d'un compresseur haute-pression d'un turboréacteur est déterminé par le débit réduit d'air WR en entrée du compresseur et le rapport entre la pression totale Ps en sortie du compresseur et la pression totale Pe en entrée de celui-ci. Comme illustré schématiquement à la figure 1A, cette représentation permet avantageusement de modéliser la ligne de fonctionnement LFnom du compresseur (à partir de différents points de fonctionnement du compresseur) ainsi que ses limites, et plus particulièrement les zones dans lesquelles un risque de pompage du turboréacteur existe (délimitées par la ligne de pompage LPnom). Pour rappel, le pompage est une instabilité aérodynamique du compresseur du turboréacteur résultant d'une différence de pression élevée entre l'entrée et la sortie du compresseur et qui peut se manifester notamment sous la forme d'une inversion du sens de l'écoulement de l'air à l'intérieur du turboréacteur.

Lors du pilotage du turboréacteur, il est connu de prévoir un besoin de marge résiduelle dit stack-up de marge (identifié par STACK sur la figure 1A), entre la limite de pompage et la ligne de fonctionnement du compresseur haute-pression d'un moteur moyen neuf, qui tient compte de différents phénomènes pouvant impacter le fonctionnement du turboréacteur (ex. vieillissement du turboréacteur, transferts thermiques, dispersion des composants, imprécisions des capteurs, etc.). Ces phénomènes se traduisent par une ligne de fonctionnement LFdet plus haute du compresseur haute-pression et une limite de pompage LPdet plus basse par rapport à la ligne de fonctionnement nominale LFnom et à la limite de pompage nominale LPnom.

La régulation du turboréacteur assurée par le calculateur du dispositif de régulation électronique pleine autorité du turboréacteur (aussi connu sous le nom de FADEC (Full Authority Digital Electronic Control)) et visant à le protéger contre un pompage, n'est pas réalisée en mesurant les paramètres intrinsèques du compresseur tels que le débit d'air en entrée et les pressions totales en entrée et sortie, mais en utilisant des capteurs moins chers, plus robustes, facilement installables et ayant une meilleure dynamique permettant de mesurer le débit de carburant injecté dans la chambre de combustion du turboréacteur, la température en entrée du compresseur, la pression statique dans la chambre de combustion et le régime XNR du turboréacteur. L'utilisation de ce type de capteurs est en effet rendu possible par l'existence de relations connues, sous certaines hypothèses, entre le régime réduit du turboréacteur et le débit réduit d'air en entrée du compresseur, et entre le rapport de pressions totales en entrée et sortie du compresseur et le rapport du débit de carburant C sur la pression P en sortie du compresseur haute-pression. Sur la base de ces hypothèses, la protection contre le pompage est assurée en calculant une limite débit carburant sur pression C/P (aussi appelée butée haute BH ou encore butée de pompage) correspondant à la limite de pompage la plus basse LPdet qui tient compte des phénomènes cités précédemment pouvant affecter le fonctionnement du turboréacteur (et notamment sa régulation). La **figure 1B** illustre cette butée haute BH par rapport à la ligne de fonctionnement nominale LFnom' du compresseur du compresseur exprimée en rapport C/P versus régime XNR du turboréacteur.

Les avionneurs ont aujourd'hui des exigences de plus en plus importantes concernant les poussées au ralenti des moteurs de nouvelle génération. Ces exigences conduisent à de nouvelles problématiques en terme de marge afin de pouvoir envisager des ralentis au sol avec des poussées de plus en plus faibles, autrement dit des régimes moteur de plus en plus faibles, le régime moteur étant l'un des éléments les plus représentatifs de la poussée du turboréacteur.

En effet, une poussée au ralenti trop faible peut conduire à un phénomène de dévissage ou de blocage en accélération du turboréacteur. Le dévissage d'un turboréacteur se manifeste par une chute anormale du régime moteur du turboréacteur, autrement dit une décélération anormale du turboréacteur, alors que sa consigne en débit carburant est sur la butée haute BH mentionnée précédemment et destinée à le protéger contre un pompage du compresseur.

Pour préserver le turboréacteur d'un tel risque de dévissage, il est connu aujourd'hui de considérer lors de la régulation du turboréacteur une marge de protection supplémentaire du turboréacteur contre un dévissage (aussi appelée marge au dévissage, exprimée en termes de rapport débit carburant sur pression C/P). La prise en compte d'une telle marge conduit toutefois généralement à rehausser la poussée du turboréacteur lors des ralentis pour assurer le bon fonctionnement stabilisé au ralenti du turboréacteur et les temps d'accélération.

Il existe donc un besoin d'un procédé de contrôle de la poussée au ralenti d'un turboréacteur permettant d'assurer un bon fonctionnement du turboréacteur tout en répondant aux exigences de plus en plus importantes des avionneurs. Le document FR2992355 décrit un procédé et dispositif d'ajustement d'une valeur seuil de débit carburant d'une turbomachine.

Objet et résumé de l'invention

La présente invention répond notamment à ce besoin en proposant un procédé de contrôle d'une poussée au ralenti d'un turboréacteur régulé en débit carburant au moyen d'une butée haute de protection contre un pompage d'un compresseur du turboréacteur, ce procédé comprenant :

- une étape d'obtention d'un premier point de fonctionnement du turboréacteur sur la butée haute correspondant à une première valeur de poussée, cette butée haute tenant compte d'une sous-estimation du débit carburant injecté dans la chambre de combustion du turboréacteur lors de la régulation du turboréacteur ;
- une première étape de pilotage du turboréacteur pour atteindre le premier point de fonctionnement ;
- une étape de surveillance du turboréacteur destinée à détecter un dévissage du compresseur ;
- si un dévissage est détecté :

  ◦ une étape d'obtention d'un second point de fonctionnement correspondant à une seconde valeur de poussée du turboréacteur supérieure à la première valeur, et garantissant une marge par rapport à la butée haute qui est déterminée pour protéger le turboréacteur contre un dévissage du compresseur ; et
  ◦ une seconde étape de pilotage du turboréacteur pour atteindre le second point de fonctionnement.

Corrélativement, l'invention vise aussi un dispositif de contrôle d'une poussée au ralenti d'un turboréacteur régulé en débit carburant au moyen d'une butée haute de protection contre un pompage d'un compresseur du turboréacteur, ce dispositif comprenant :

- un module d'obtention d'un premier point de fonctionnement du turboréacteur sur la butée haute correspondant à une première valeur de poussée, cette butée haute tenant compte d'une sous-estimation du débit carburant injecté dans la chambre de combustion du turboréacteur lors de la régulation du turboréacteur ;
- un module de pilotage apte à piloter le turboréacteur pour atteindre le premier point de fonctionnement ;
- un module de surveillance du turboréacteur apte à détecter un dévissage du compresseur ;
- des modules, activés si un dévissage est détecté par le module de surveillance :

  ◦ d'obtention d'un second point de fonctionnement correspondant à une seconde valeur de poussée du turboréacteur supérieure à la première valeur, et garantissant une marge par rapport à la butée haute qui est déterminée pour protéger le turboréacteur contre un dévissage du compresseur ; et
  ◦ de pilotage du turboréacteur pour atteindre le second point de fonctionnement.

L'invention propose ainsi un mécanisme judicieux qui permet d'adapter la poussée d'un turboréacteur en fonction d'un risque réel de dévissage de son compresseur, grâce à la prise en compte des imprécisions des mesures du débit carburant utilisées pour la régulation du turboréacteur. Ce mécanisme, tout en continuant de protéger le turboréacteur contre un pompage de son compresseur, n'envisage donc pas une politique du pire cas considérant systématiquement un risque de dévissage pour piloter le turboréacteur, mais s'adapte au comportement du turboréacteur. Plus précisément, le turboréacteur est piloté dans un premier temps de sorte à atteindre un premier point de fonctionnement correspondant à une première valeur de poussée « basse », puis si cette première valeur de poussée s'avère insuffisante et entraîne un dévissage du turboréacteur, une transition vers un second point de fonctionnement correspondant à une seconde valeur de poussée plus élevée que la première est mise en oeuvre afin d'éviter un dysfonctionnement du turboréacteur et garantir sa pilotabilité.

Les inventeurs ont avantageusement identifié qu'ils existent des phénomènes tels que notamment certaines imprécisions de mesure du débit carburant injecté dans la chambre de combustion du turboréacteur ou des prélèvements d'air (i.e. fuites) en sortie du compresseur du turboréacteur, qui ont un impact positif sur la marge au pompage du compresseur (c'est-à-dire qui diminuent ses risques de pompage) mais peuvent pénaliser la pilotabilité du turboréacteur lorsque celui-ci fonctionne au ralenti (ex. lors d'un ralenti au sol).

Ainsi, plus spécifiquement, un débit carburant injecté dans la chambre de combustion du turboréacteur inférieur à la consigne de régulation (par exemple, parce qu'il est surestimé par le capteur de débit carburant) est sans risque vis-à-vis d'un pompage du compresseur, mais peut empêcher le turboréacteur d'accélérer correctement, voire provoquer un dévissage de ce dernier (c'est-à-dire une décélération au lieu d'une accélération).

De façon similaire, une fuite d'air trop importante en sortie du compresseur (ex. fuite d'air sous-estimée) fait baisser la ligne de fonctionnement du compresseur diminuant ainsi son risque de pompage, mais modifie également le rapport de pressions versus rapport débit carburant sur pression C/P. Ce phénomène a un effet similaire à l'erreur de dosage du débit carburant envisagée ci-dessus.

Les inventeurs proposent astucieusement de contrôler la poussée du turboréacteur en tenant compte de ces phénomènes. Du fait qu'une imprécision de mesure du débit carburant peut être plus aisément estimée à partir des spécifications des capteurs de débit carburant qu'une imprécision de mesure de prélèvements d'air (les phénomènes régissant l'incertitude de mesure du débit carburant comme par exemple la température et le type du carburant, la dispersion du capteur de mesure de position du doseur de carburant, sont en effet mieux connus que ceux régissant les imprécisions de mesure du débit d'air et qui mettent en jeux plusieurs capteurs), l'invention propose d'adapter la poussée du turboréacteur en estimant en temps réel les besoins de ce dernier en termes de marge au dévissage à partir des imprécisions de mesure du débit carburant effectivement rencontrées sur le turboréacteur. Les inventeurs s'appuient plus spécifiquement sur le principe qu'un débit carburant ne peut être en même temps surestimé et sous-estimé par un capteur de débit carburant. On évite ainsi les inconvénients de l'état de la technique qui tend à considérer de manière systématique des imprécisions de mesure de débit carburant qui peuvent s'avérer tantôt pénalisantes dans un sens pour le pompage, tantôt pénalisantes dans un autre sens pour le dévissage.

La logique de contrôle de la poussée proposée par l'invention consiste donc avantageusement à considérer dans un premier temps, pour piloter le turboréacteur (i.e. pilotage pour atteindre un premier point de fonctionnement), uniquement les imprécisions de mesure de débit carburant ayant un impact sur la marge au pompage, et plus particulièrement, celles conduisant à une sous-estimation du débit carburant (i.e. on ne tient pas compte à ce stade des imprécisions conduisant à une surestimation du débit de carburant qui ont un impact sur la marge au dévissage du turboréacteur).

On choisit ainsi par exemple comme premier point de fonctionnement, un point de fonctionnement du turboréacteur tenant compte d'une marge au dévissage relativement aux phénomènes susceptibles d'affecter la régulation du turboréacteur à l'exception des imprécisions de mesure du débit carburant.

Le premier point de fonctionnement du turboréacteur qui est déterminé conformément à cette stratégie peut en outre correspondre à une marge résiduelle nulle par rapport à la butée haute en débit carburant. De cette sorte, on minimise la première valeur de poussée au ralenti du turboréacteur.

Puis dans un second temps, si cela s'avère pertinent, autrement dit si cette première valeur de poussée est trop faible et entraîne un dévissage du turboréacteur, une transition vers une seconde valeur de poussée supérieure à la première poussée et tenant compte d'une marge au dévissage prédéterminée est mise en oeuvre (pilotage pour atteindre un second point de fonctionnement). La marge au dévissage considérée est déterminée préférentiellement de sorte à tenir compte d'une surestimation du débit carburant injecté dans la chambre de combustion du turboréacteur lors de la régulation du turboréacteur, estimée notamment à l'aide des spécifications du capteur de débit carburant utilisé et des équations physiques du turboréacteur.

Ce mécanisme de contrôle de la poussée du turboréacteur proposé par l'invention permet d'assurer la pilotabilité du turboréacteur tout en proposant un niveau de poussée nominal au ralenti relativement bas permettant de répondre aux besoins spécifiés par les avionneurs. Le second point de fonctionnement du turboréacteur correspondant à la seconde valeur de poussée est bien entendu choisi de manière à permettre une transition du turboréacteur de la première poussée vers la seconde poussée. Il dépend du turboréacteur qui est modélisé par sa ligne de fonctionnement auquel appartient le second point de fonctionnement.

Il convient de noter que ce second point de fonctionnement est choisi préférentiellement de sorte à garantir une pilotabilité du turboréacteur indépendamment des conditions de mesure du débit carburant. Les imprécisions de mesure du débit carburant peuvent en effet dépendre de la température du carburant, de sorte que l'erreur de dosage n'est pas nécessairement constante. On choisit préférentiellement comme marge au dévissage celle qui permet de se ramener dans des conditions sécuritaires déterministes (i.e. indépendantes des conditions de mesure du débit carburant) dès qu'un dévissage a été détecté de sorte à éviter un dysfonctionnement du turboréacteur.

Dans un mode privilégié de réalisation de l'invention, lors de l'étape de surveillance, on détecte un dévissage du compresseur lorsqu'un gradient d'un régime du compresseur est négatif pour une consigne en débit carburant correspondant à la butée haute.

Ce mode de réalisation offre un indicateur en temps réel d'un dévissage du turboréacteur simple et fiable.

Dans un mode particulier de réalisation, la butée haute est déterminée en ajustant une butée théorique de débit carburant reflétant divers phénomènes impactant la régulation du turboréacteur à l'exception des imprécisions de mesure du débit carburant. Cette butée théorique représente une ligne de pompage du compresseur.

De façon similaire, dans un mode particulier de réalisation, le premier point de fonctionnement et le second point de fonctionnement sont sur une ligne de fonctionnement du compresseur du turboréacteur tenant compte des phénomènes impactant la régulation du turboréacteur.

De tels phénomènes sont notamment le vieillissement du turboréacteur, les transferts thermiques, la dispersion des composants, les imprécisions d'autres capteurs que le capteur de mesure du débit carburant, etc. L'impact de ces phénomènes sur la butée haute de régulation de débit carburant et la ligne de fonctionnement du turboréacteur peut être dimensionné de façon connue de l'homme du métier à partir notamment d'informations fournies par l'avionneur (ex. spécification des composants) ou par expérimentation.

Ainsi, par exemple, les phénomènes suivants sont pris en compte pour abaisser la butée théorique et déterminer la butée haute : dispersion de fabrication des composants, distorsion de l'écoulement d'air, transitoires thermiques, usure des jeux du compresseur, etc.

De même, les phénomènes suivants sont pris en compte pour déterminer la ligne de fonctionnement sur lesquels se trouvent les points de fonctionnement utilisés par l'invention : vieillissement général du turboréacteur, distorsion, transitoires thermiques, transitoires moteur (accélération), prélèvements de puissance pour le fonctionnement avion (générateur électrique, pompes hydrauliques), etc.

Dans un mode de réalisation de l'invention, la seconde étape de pilotage comprend :

- une augmentation de la butée haute ;
- une augmentation du débit carburant injecté dans la chambre de combustion du turboréacteur ;
- une action sur au moins une géométrie variable du turboréacteur, telle que par exemple une vanne de décharge du compresseur du turboréacteur.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations, ce programme étant susceptible d'être mis en oeuvre dans un dispositif de contrôle ou plus généralement dans un ordinateur, ce programme comportant des instructions adaptées à la mise en oeuvre des étapes d'un procédé de contrôle tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Dans un mode particulier de réalisation, le dispositif de contrôle est intégré dans le calculateur du dispositif de régulation pleine autorité (FADEC) du turboréacteur.

L'invention vise également un turboréacteur comprenant un dispositif de contrôle selon l'invention.

On peut également envisager, dans d'autres modes de réalisation, que le procédé de contrôle, le dispositif de contrôle et le turboréacteur selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- les figures 1A et 1B, déjà décrites, illustrent schématiquement le principe de la régulation d'un turboréacteur par butée haute de débit carburant ;
- la figure 2 représente schématiquement un dispositif de contrôle et un turboréacteur conformes à l'invention, dans un mode particulier de réalisation ;
- la figure 3 illustre schématiquement l'architecture matérielle du dispositif de contrôle de la figure 2 ;
- la figure 4 représente, sous forme d'ordinogramme, les principales étapes d'un procédé de contrôle selon l'invention dans un mode particulier de réalisation dans lequel il est mis en oeuvre par le dispositif de contrôle de la figure 2 ;
- la figure 5 illustre le choix des points de fonctionnement utilisés lors du procédé de contrôle selon l'invention ;
- la figure 6 représente les étapes mises en oeuvre pour détecter un dévissage du compresseur, dans un mode particulier de réalisation de l'invention ; et
- les figures 7A et 7B illustrent un exemple d'application du procédé de contrôle selon l'invention.

Description détaillée de l'invention

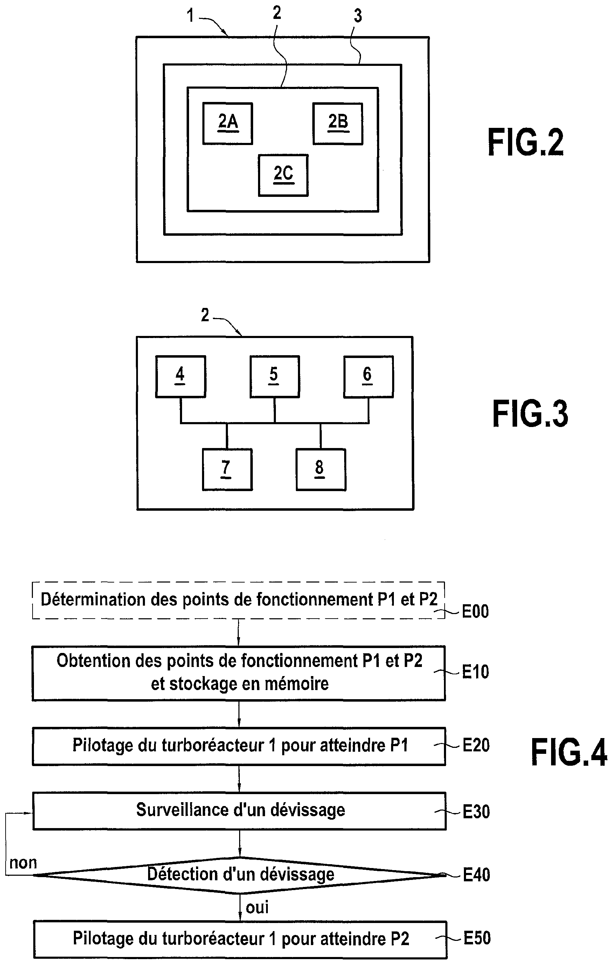

La **figure 2** représente schématiquement, dans son environnement, un turboréacteur 1 conforme à l'invention dans un mode particulier de réalisation.

Dans l'exemple envisagé ici, le turboréacteur 1 est un turboréacteur double corps double flux propulsant un avion, comprenant un compresseur basse pression et un compresseur haute-pression (non représentés sur la figure 2). Toutefois l'invention s'applique à d'autres turboréacteurs tels que par exemple à un turboréacteur mono corps, ainsi qu'à d'autres types d'aéronefs.

Conformément à l'invention, la poussée au ralenti du turboréacteur 1 est contrôlée par un dispositif 2 de contrôle de poussée conforme à l'invention, embarqué dans le turboréacteur 1. Plus précisément, dans le mode de réalisation décrit ici, le dispositif 2 de contrôle de poussée est intégré dans le calculateur 3 du dispositif de régulation pleine autorité du turboréacteur aussi appelé FADEC.

Comme mentionné précédemment, le dispositif 2 contrôle la poussée au ralenti du turboréacteur 1 potentiellement en deux temps :

- dans un premier temps, il pilote le turboréacteur 1 par le biais d'un module de pilotage 2A de sorte que le turboréacteur 1 atteigne un premier point de fonctionnement P1 correspondant à une première poussée THR1 « basse », ce premier point de fonctionnement étant déterminé de sorte à protéger le turboréacteur 1 contre un pompage de son compresseur haute-pression ;

- puis dans un second temps, s'il s'avère que la poussée THR1 est trop faible et entraîne un dévissage du compresseur haute-pression du turboréacteur 1, le dispositif 2 de contrôle pilote le turboréacteur 1, par le biais de son module de pilotage 2A, de sorte que celui-ci atteigne un second point de fonctionnement P2 correspondant à une seconde poussée THR2 plus élevée que la première poussée, ce second point de fonctionnement étant déterminé de sorte à protéger le turboréacteur 1 non seulement contre un pompage de son compresseur haute-pression mais également contre un dévissage de ce dernier.

Chaque point de fonctionnement P1 et P2 est défini ici par un couple comprenant :

- une vitesse de rotation du compresseur haute-pression du turboréacteur 1 ; et
- un rapport C/P où C désigne la consigne de débit de carburant et P la pression en sortie du compresseur haute-pression.

Par souci de simplification, et sauf mention contraire, le terme « compresseur » désigne dans la suite de cette description le compresseur haute-pression du turboréacteur.

Le basculement d'un mode de pilotage à l'autre (i.e. du ralenti caractérisé par la poussée THR1 au ralenti caractérisé par la poussée THR2) est déclenché par la détection d'un dévissage du compresseur haute-pression du turboréacteur 1, par un module de détection 2B prévu à cet effet. L'obtention des points de fonctionnement P1 et P2 utilisés par le module de pilotage 2A est gérée par un module d'obtention 2C. Ces points de fonctionnement sont, dans le mode de réalisation décrit ici, déterminés préalablement à partir des caractéristiques du turboréacteur 1 et de ses composants, comme indiqué plus en détail ultérieurement.

Dans le mode de réalisation décrit ici, les modules fonctionnels de pilotage 2A, de détection d'un dévissage 2B et d'obtention des points de fonctionnement 2C décrits précédemment sont des modules logiciels implémentés par le dispositif 2 de contrôle dans le cadre de la logique de régulation du turboréacteur 1 mise en oeuvre par le FADEC 3.

A cet effet, le dispositif 2 de contrôle dispose de l'architecture matérielle d'un ordinateur (qui repose ici sur l'architecture matérielle du FADEC 3), telle qu'illustrée schématiquement à la **figure 3**. Il comprend notamment un processeur 4, une mémoire vive 5, une mémoire morte 6, une mémoire flash non volatile 7, ainsi que des moyens de communication 8 avec les composants du turboréacteur 1. Ces éléments matériels sont éventuellement partagés avec d'autres unités de régulation du FADEC 3.

La mémoire morte 6 du dispositif 2 de contrôle constitue un support d'enregistrement conforme à l'invention, lisible par le processeur 4 et sur lequel est enregistré un programme d'ordinateur conforme à l'invention, comportant des instructions pour l'exécution des étapes d'un procédé de contrôle conforme à l'invention décrites maintenant en référence à la figure 4.

La **figure 4** illustre, sous forme d'ordinogramme, les principales étapes du procédé de contrôle de la poussée au ralenti du turboréacteur 1 dans un mode particulier de réalisation de l'invention dans lequel il est mis en oeuvre par le dispositif 2 de contrôle de la figure 2. On s'intéresse ici au contrôle de la poussée du turboréacteur 1 lors d'un ralenti au sol.

Dans le mode de réalisation décrit ici, les points de fonctionnement P1 et P2 utilisés pour le contrôle de la poussée par le dispositif 2 de contrôle sont déterminées lors d'une étape préalable au contrôle de la poussée à proprement parler (étape E00). Cette étape peut être mise en oeuvre par un opérateur ou par un dispositif distinct du dispositif 2 de contrôle ; les points de fonctionnement P1 et P2 sont alors fournis au dispositif 2 de contrôle et plus précisément à son module d'obtention 2C, par exemple par le biais des moyens de communication 8. Ils sont ensuite stockés par le module d'obtention 2C dans la mémoire non volatile 7 du dispositif 2 de contrôle (étape E10).

Comme mentionné précédemment, pour déterminer ces points de fonctionnement, les inventeurs ont exploité le fait qu'une imprécision de mesure du débit réel de carburant injecté dans la chambre de combustion du turboréacteur 1 ne peut simultanément conduire à une sous-estimation et à une surestimation du débit de carburant. En d'autres mots, le capteur utilisé lors de la régulation du turboréacteur pour estimer le débit de carburant injecté dans la chambre de combustion ne peut à la fois sous-estimer et surestimer ce débit. Un tel capteur est connu en soi et n'est pas décrit en détail ici.

Or, comme souligné précédemment, une surestimation du débit de carburant (qui résulte en un sous-dosage du débit carburant) n'entraîne aucun risque de pompage du compresseur mais peut empêcher le turboréacteur 1 d'accélérer correctement, voire résulter en un dévissage du compresseur haute-pression du turboréacteur 1. Les inventeurs proposent avantageusement, lorsqu'une telle situation est détectée, de prévoir une marge de protection supplémentaire contre un dévissage du compresseur de sorte que non seulement le turboréacteur est protégé contre un pompage mais également contre un dévissage de son compresseur.

Toutefois, pour optimiser la poussée au ralenti du turboréacteur 1, une telle marge de protection supplémentaire contre un dévissage (aussi désignée dans cette description par marge au dévissage) n'est mise en oeuvre que lorsqu'une surestimation du débit de carburant est détectée, autrement dit ici, que lorsqu'un dévissage du compresseur haute-pression du turboréacteur 1 est avéré. Ceci permet, dans le cas contraire, d'abaisser la poussée du turboréacteur 1 et satisfaire ainsi les contraintes de plus en plus exigeantes des avionneurs.

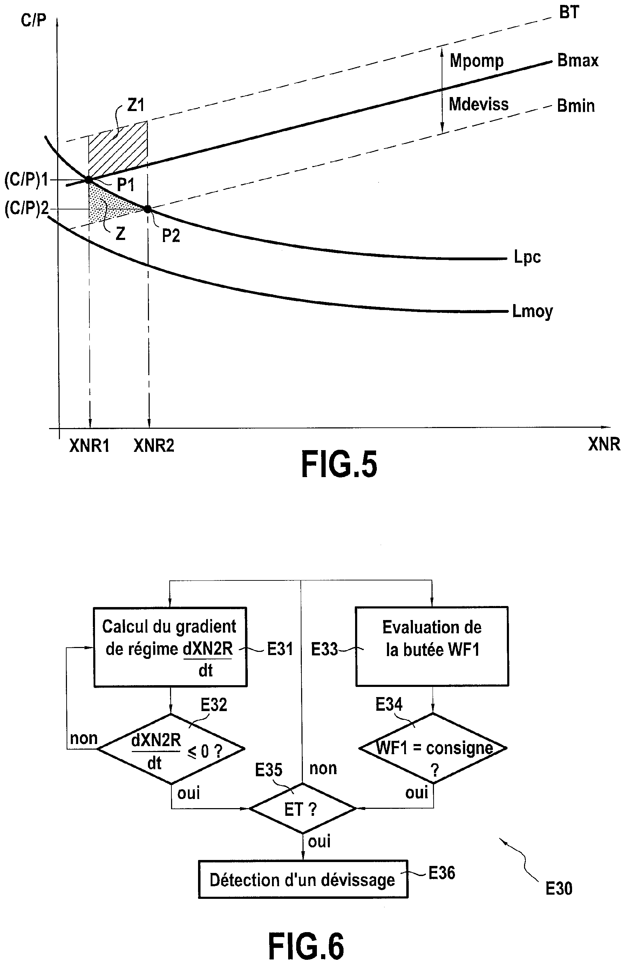

En référence à la **figure 5,** dans le mode de réalisation décrit ici, pour mettre en oeuvre cette stratégie, le point de fonctionnement P1 est déterminé à l'intersection de deux courbes, à savoir :

- d'une butée haute Bmax de rapport C/P ; et
- de la ligne de fonctionnement Lpc du compresseur haute-pression du turboréacteur 1.

La butée haute Bmax est obtenue en ajustant une butée haute théorique BT de sorte à tenir compte d'une sous-estimation du débit carburant injecté dans la chambre de combustion du turboréacteur 1 lors de la régulation du turboréacteur. En d'autres mots, la butée théorique BT est abaissée d'une marge Mpomp de protection du turboréacteur contre un pompage de son compresseur haute-pression. Cette marge au pompage Mpomp peut être estimée aisément à partir des informations fournies par l'avionneur ou par le fabricant du capteur utilisé pour mesurer le débit de carburant injecté dans la chambre de combustion (i.e. à partir notamment de la précision du capteur). Elle peut être quantifiée et traduite en valeur de rapport C/P à partir des équations physiques du turboréacteur 1.

La butée théorique BT est une butée haute de régulation en C/P déterminée de façon connue en soi, et qui reflète divers phénomènes impactant la régulation du turboréacteur comme par exemple le vieillissement du turboréacteur, les transferts thermiques, les imprécisions de mesure des capteurs intervenant dans la régulation (ex. capteurs de température, de pression, etc.), à l'exception toutefois des imprécisions de mesure du capteur de débit carburant, et ce afin de ne pas comptabiliser plusieurs fois ces imprécisions.

La butée haute Bmax ne prévoit ainsi pas de marge au dévissage relative aux imprécisions de mesure du capteur de débit carburant.

La ligne Lpc de fonctionnement du compresseur est une ligne de fonctionnement pire cas, obtenue de façon connue en soi, en ajustant la ligne de fonctionnement Lmoy d'un compresseur haute-pression d'un turboréacteur moyen à l'état neuf de sorte à tenir compte des divers phénomènes précités, c'est-à-dire le vieillissement du turboréacteur, la dispersion des composants, les imprécisions de mesure des capteurs intervenant dans la régulation (ex. capteurs de température, de pression, etc.). En d'autres mots, on considère la ligne de fonctionnement d'un compresseur haute-pression d'un turboréacteur dont le capteur de débit carburant a un comportement moyen.

Le point de fonctionnement P1 ainsi choisi ne prévoit aucune marge résiduelle (stack-up de marge) entre la ligne de pompage Bmax et la ligne de fonctionnement Lpc du compresseur haute-pression. La ligne de pompage Bmax inclut toutefois une marge au dévissage qui tient compte des différents phénomènes susceptibles d'impacter la régulation du turboréacteur 1 à l'exception des imprécisions de mesure du capteur de débit carburant.

Le point de fonctionnement P1 ainsi défini est caractérisé par le régime XNR1 du compresseur haute-pression et un rapport débit carburant sur pression (C/P)1. Le régime XNR1 correspond à une poussée au ralenti THR1 du turboréacteur 1.

On note que certains turboréacteurs ont des vannes de décharge au niveau du compresseur haute-pression qui permettent de restaurer de la marge entre la limite de pompage et le point de fonctionnement. Cette marge est utilisée pour déterminer le taux d'accélération nominal du turboréacteur. L'existence de telles vannes peut conduire à modifier la valeur de la butée en C/P. Lors de la mise en oeuvre de l'invention, elles sont par conséquent préférentiellement prises en compte le cas échéant pour déterminer à partir de quel régime le turboréacteur est capable d'accélérer et le taux d'accélération correspondant, autrement dit pour déterminer le point de fonctionnement P1.

Le point de fonctionnement P2 est déterminé à l'intersection de deux courbes, à savoir :

- d'une butée haute Bmin de rapport C/P ; et
- de la ligne de fonctionnement Lpc du compresseur haute-pression du turboréacteur 1.

La butée haute Bmin est obtenue en ajustant la butée haute Bmax de sorte à tenir compte d'une surestimation du débit carburant injecté dans la chambre de combustion du turboréacteur 1 lors de la régulation du turboréacteur. En d'autres mots, la butée Bmax est maintenant abaissée d'une marge supplémentaire Mdeviss de protection du turboréacteur contre un dévissage de son compresseur haute-pression qui tient compte des imprécisions de mesure du débit de carburant et plus précisément d'une surestimation du débit carburant injecté dans la chambre de combustion du turboréacteur lors de la régulation du turboréacteur 1. Cette marge au dévissage Mdeviss peut être estimée aisément à partir des informations fournies par l'avionneur ou par le fabricant du capteur utilisé pour mesurer le débit de carburant injecté dans la chambre de combustion (i.e. à partir notamment de la précision du capteur). Elle peut être quantifiée et traduite en valeur de rapport C/P à partir des équations physiques du turboréacteur 1. Il convient toutefois de noter que les imprécisions de mesure du débit carburant sont liées non seulement au capteur utilisé pour mesurer ce débit, mais peuvent également varier en fonction des conditions dans lesquelles sont réalisées les mesures. Par exemple, la précision d'un doseur est liée à la température du carburant. L'erreur de précision sur la mesure réalisée par le capteur n'est donc pas nécessairement constante au long d'un vol. Pour déterminer la marge Mdeviss, on se place préférentiellement dans des conditions sécuritaires déterministes (autrement dit, on estime la marge Mdeviss en prenant en compte le pire cas).

La butée haute Bmin prévoit ainsi à la fois une marge au pompage et une marge au dévissage tenant compte toutes les deux des imprécisions de mesure de débit de carburant.

Le point de fonctionnement P2 ainsi défini est caractérisé par le régime XNR2 du compresseur haute-pression et un rapport débit carburant sur pression (C/P)2. Le régime XNR2 correspond à une poussée au ralenti THR2 du turboréacteur 1.

Nous allons maintenant décrire comment le contrôle de la poussée du turboréacteur 1 est mis en oeuvre conformément à l'invention par le dispositif 2 de contrôle, lors d'un ralenti au sol de l'avion équipé du turboréacteur 1. On suppose, comme mentionné précédemment, que les valeurs des points de fonctionnement P1 et P2 ont été obtenus par le module 2C d'obtention du dispositif de contrôle 2 et stockés dans sa mémoire non volatile 7 (étape E10).

Lorsqu'un ralenti au sol est détecté, le dispositif 2 de contrôle pilote le turboréacteur 1, via son module de pilotage 2A, de sorte que celui-ci atteigne le premier point de fonctionnement P1 et la première poussée THR1 (étape E20). Ce pilotage est réalisé de façon connue en soi, en tenant compte de la consigne (C/P)1 en débit carburant et du régime moteur XNR1 associés au point de fonctionnement P1.

Par ailleurs, une surveillance est mise en oeuvre par le module de détection 2B du dispositif de contrôle 2 pour détecter si un dévissage du turboréacteur 1 piloté à ce niveau de ralenti apparaît (étape E30).

Dans le mode de réalisation décrit ici, cette surveillance est réalisée comme illustré schématiquement à la **figure 6.**

Plus précisément, le module de détection 2B évalue à partir d'une mesure du régime XN25 du compresseur haute-pression, le gradient de régime dXN25/dt, de façon connue de l'homme du métier (étape E31).

Puis il détermine si ce gradient est négatif ou nul (étape test E32).

Si le gradient est positif, aucun dévissage n'est détecté, et un nouveau gradient est évalué à partir d'une nouvelle mesure du régime XN25 du compresseur haute-pression (réponse non à l'étape E32).

En parallèle, le module de détection 2B évalue également le débit de carburant WF1 correspondant à la butée (C/P)1 de protection contre le pompage selon l'équation suivante (étape E33) :

$$WF1 = (C/P)1 \times PS3 \times \sqrt{\frac{T25}{Tstd}}$$

où PS3 désigne la pression statique du compresseur haute-pression, T25 la température totale en entrée du compresseur haute-pression et Tstd la température standard au niveau de la mer (i.e. égale à 288.15 K (Kelvin) soit 15°C (Celsius)).

Puis la valeur de consigne WFc en débit carburant utilisée pour la régulation du turboréacteur 1 est comparée à cette valeur WF1 par le module de détection 2B à (étape test E34). L'obtention de la valeur de consigne WFc par le module de détection 2B auprès du FADEC ne pose pas de problème en soi et n'est pas décrite ici.

Si la valeur de consigne WFc est distincte de la butée haute WF1 (à un seuil de tolérance prédéterminé près), aucun dévissage n'est détecté, et la surveillance est maintenue (réponse non à l'étape E34).

Si le gradient de régime dXN25/dt est négatif (réponse oui à l'étape E32) et la valeur de consigne WFc est sur la butée haute WF1 (réponse oui à l'étape E34)(réponse oui à l'étape test E35), un dévissage du compresseur haute-pression est détecté par le module de détection 2B (étape E36).

Sinon (réponse non à l'étape test E35), aucun dévissage n'est détecté et la surveillance mise en oeuvre par le module de détection 2B du dispositif 2 de contrôle selon les étapes E31-E35 continue.

Si un dévissage a été détecté par le module de détection 2B (réponse oui à l'étape test E40), une transition vers une poussée THR2 du turboréacteur 1 plus élevée que la poussée THR1 courante est amorcée. En d'autres mots, l'hypothèse retenue selon laquelle le capteur de débit carburant sous-estime le débit carburant injecté dans la chambre de combustion du turboréacteur (et qui correspond à la définition du point de fonctionnement P1) n'est pas correcte, i.e. le capteur surestime en fait le débit carburant réel injecté dans la chambre de combustion. Il existe donc un besoin d'une marge au dévissage au ralenti relative aux imprécisions de mesure du débit carburant entre la ligne de fonctionnement du compresseur Lpc et la butée haute Bmax (i.e. on se positionne sur la butée haute Bmin).

A cet effet, le module de pilotage 2A du dispositif 2 de contrôle pilote le turboréacteur 1 de sorte que celui-ci atteigne le point de fonctionnement P2 stocké dans la mémoire non volatile 7 (étape E50). Ceci revient à augmenter la consigne de régime du compresseur (de la valeur XNR1 à XNR2). Cette valeur de consigne XNR2 a été déterminée pour garantir le non dévissage du compresseur.

Cette étape de pilotage peut comprendre au moins l'une des étapes suivantes :

-   une augmentation de la butée haute (correction possible de la butée haute de Bmax à BT dans la zone Z1 représentée sur la figure 5) ;

- une augmentation du débit carburant injecté dans la chambre de combustion (conséquence directe du changement de point de fonctionnement de P1 à P2, rendue possible grâce à l'augmentation de la butée) ; et/ou
- une action sur au moins une géométrie variable du turboréacteur, telle que par exemple sur une vanne de décharge d'air du compresseur haute pression (HBV pour « Handling Bleed Valve » en anglais) en transitoire.

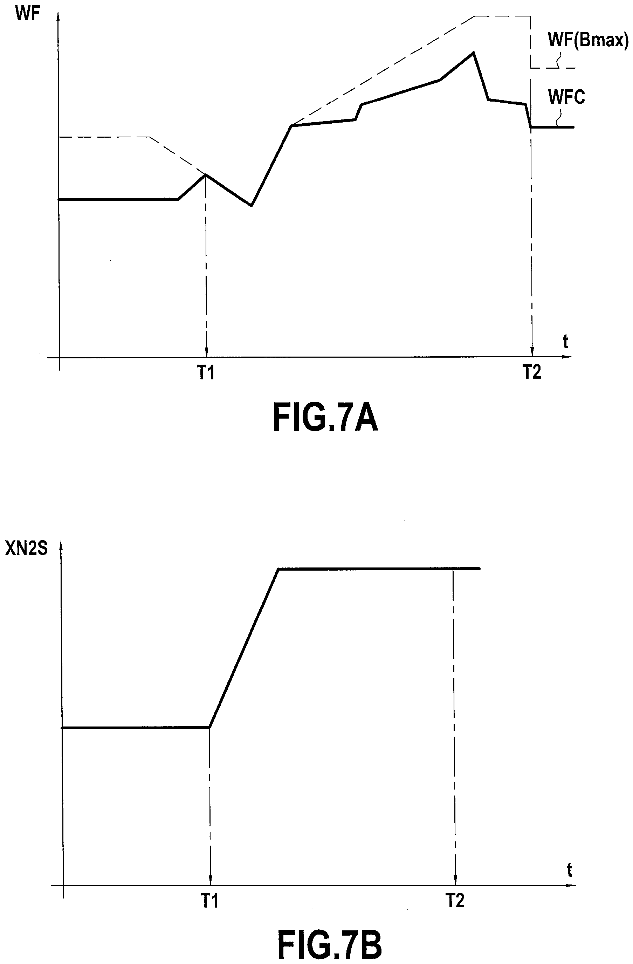

Les **figures 7A et 7B** illustrent la logique mise en oeuvre par le dispositif 2 de contrôle qui vient d'être décrite, et des exemples d'actions mises en oeuvre pour piloter le turboréacteur 1 vers le point de fonctionnement P2.

La figure 7A représente l'évolution de la consigne en débit de carburant WFc en fonction du temps (courbe en traits continus) par rapport à la butée haute WF(Bmax) (courbe en traits interrompus).

La figure 7B représente l'évolution du régime réduit XNR25 du compresseur haute-pression en fonction du temps.

A l'instant t=T1, un dévissage du compresseur haute-pression est détecté alors que la consigne en débit carburant est sur la butée haute Bmax. Lorsque le dévissage est détecté par le module de détection 2B, la butée Bmax est automatiquement rehaussée par le module de pilotage 2A (application d'un biais prédéterminé) et la consigne de régime XNR25 est augmentée pour atteindre la valeur correspondant à la valeur XNR2 du point de fonctionnement P2, de sorte à garantir le non dévissage du compresseur haute pression.

L'augmentation de la butée permet au turboréacteur 1 d'accélérer jusqu'au nouveau ralenti XNR2 correspondant au point de fonctionnement P2, qui est atteint à l'instant T2. Lorsque le nouveau ralenti est atteint, la butée est ramenée par le module de pilotage 2A sur sa valeur nominale. Le régime XNR2 est en revanche maintenu ici durant toute la durée du vol. Ceci permet d'assurer un bon fonctionnement du turboréacteur durant tout le vol sans se préoccuper de déterminer si les causes du dévissage ont ou non disparu durant le vol.

**Revendications**

1. Procédé de contrôle d'une poussée au ralenti d'un turboréacteur (1) régulé en débit carburant au moyen d'une butée haute de protection (Bmax) contre un pompage d'un compresseur du turboréacteur, ledit procédé comprenant :

   - une étape d'obtention (E10) d'un premier point de fonctionnement (P1) du turboréacteur sur la butée haute correspondant à une première valeur de poussée, ladite butée haute tenant compte d'une sous-estimation du débit carburant injecté dans la chambre de combustion du turboréacteur lors de la régulation du turboréacteur ;
   - une première étape (E20) de pilotage du turboréacteur pour atteindre le premier point de fonctionnement ;
   - une étape de surveillance (E30,E40) du turboréacteur destinée à détecter un dévissage du compresseur ;
   - si un dévissage est détecté (E40) :

     ◦ une étape d'obtention (E10) d'un second point de fonctionnement (P2) correspondant à une seconde valeur de poussée du turboréacteur supérieure à la première valeur, et garantissant une marge (Mdeviss) par rapport à la butée haute (Bmax) qui est déterminée pour protéger le turboréacteur contre un dévissage du compresseur ; et
     ◦ une seconde étape de pilotage (E50) du turboréacteur pour atteindre le second point de fonctionnement.

2. Procédé selon la revendication 1 dans lequel la marge de protection (Mdeviss) contre un dévissage du compresseur tient compte d'une surestimation du débit carburant injecté dans la chambre de combustion du turboréacteur lors de la régulation du turboréacteur.

3. Procédé selon la revendication 1 ou 2 dans lequel lors de l'étape de surveillance (E30,E40), on détecte (E36) un dévissage du compresseur lorsqu'un gradient d'un régime du compresseur est négatif (E32) pour une consigne en débit carburant correspondant à la butée haute.

4. Procédé selon l'une quelconque des revendications 1 à 3 dans lequel la butée haute (Bmax) est déterminée en ajustant une butée théorique (BT) de débit carburant reflétant des phénomènes impactant la régulation du turboréacteur à l'exception des imprécisions de mesure du débit carburant.

5. Procédé selon l'une quelconque des revendications 1 à 4 dans lequel la seconde étape de pilotage comprend :

   - une augmentation de la butée haute ;
   - une augmentation du débit carburant injecté dans la chambre de combustion du turboréacteur ;
   - une action sur au moins une géométrie variable du turboréacteur.

6. Procédé selon la revendication 5 dans lequel ladite au moins une géométrie variable comprend une vanne de décharge du compresseur du turboréacteur.

7. Programme d'ordinateur comportant des instructions pour l'exécution des étapes du procédé de contrôle selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de contrôle selon l'une quelconque des revendications 1 à 6.

9. Dispositif de contrôle (2) d'une poussée au ralenti d'un turboréacteur (1) régulé en débit carburant au moyen d'une butée haute de protection contre un pompage d'un compresseur du turboréacteur, ledit dispositif comprenant :

   - un module d'obtention (2C) d'un premier point de fonctionnement (P1) du turboréacteur sur la butée haute correspondant à une première valeur de poussée, cette butée haute tenant compte d'une sous-estimation du débit carburant injecté dans la chambre de combustion du turboréacteur lors de la régulation du turboréacteur ;
   - un module de pilotage (2A) apte à piloter le turboréacteur pour atteindre le premier point de fonctionnement ;
   - un module de surveillance (2B) du turboréacteur apte à détecter un dévissage du compresseur ;
   - des modules (2C,2A), activés si un dévissage est détecté par le module de surveillance :

     ∘ d'obtention (2C) d'un second point de fonctionnement (P2) correspondant à une seconde valeur de poussée du turboréacteur supérieure à la première valeur, et garantissant une marge par rapport à la butée haute qui est déterminée pour protéger le turboréacteur contre un dévissage du compresseur ; et
     ∘ de pilotage (2A) du turboréacteur pour atteindre le second point de fonctionnement.

10. Turboréacteur (1) comprenant un dispositif de contrôle (2) selon la revendication 9.

**Patentansprüche**

1. Verfahren zur Steuerung eines Leerlaufschubs eines Turbotriebwerks (1), das in Bezug auf die Treibstoffrate mittels eines oberen Abregelpunkts zum Schutz (Bmax) gegen ein Pumpen eines Kompressors des Turbotriebwerks geregelt ist, wobei das Verfahren umfasst:

   - einen Schritt zum Erhalt (E10) eines ersten Betriebspunkts (P1) des Turbotriebwerks an dem oberen Abregelpunkt entsprechend einem ersten Schubwert, wobei der obere Abregelpunkt eine zu geringe Schätzung der Treibstoffrate, die in die Verbrennungskammer des Turbotriebwerks eingespritzt wird, bei der Regelung des Turbotriebwerks berücksichtigt,
   - einen ersten Schritt (E20) zur Steuerung des Turbotriebwerks, um den ersten Betriebspunkt zu erreichen,
   - einen Schritt zur Überwachung (E30, E40) des Turbotriebwerks, der dazu bestimmt ist, ein Abdrehen des Kompressors zu erfassen,
   - wenn ein Abdrehen erfasst wird (E40):

     ∘ einen Schritt zum Erhalt (E10) eines zweiten Betriebspunkts (P2) entsprechend einem zweiten Schubwert des Turbotriebwerks, der höher ist als der erste Wert und eine Spanne (Mdeviss) in Bezug auf den oberen Abregelpunkt (Bmax) garantiert, die bestimmt ist, um das Turbotriebwerk gegen ein Abdrehen des Kompressors zu schützen, und
     ∘ einen zweiten Schritt zur Steuerung (E50) des Turbotriebwerks, um den zweiten Betriebspunkt zu erreichen.

2. Verfahren nach Anspruch 1, wobei die Schutzspanne (Mdeviss) gegen ein Abdrehen des Kompressors eine zu hohe Schätzung der Treibstoffrate, die in die Verbrennungskammer des Turbotriebwerks eingespritzt wird, bei der Regelung des Turbotriebwerks berücksichtigt.

3. Verfahren nach Anspruch 1 oder 2, wobei während des Schritts zur Überwachung (E30, E40) ein Abdrehen des Kompressors erfasst wird (E36), wenn ein Gradient einer Drehzahl des Kompressors negativ (E32) in Bezug auf einen Einstellwert der Treibstoffrate entsprechend dem oberen Abregelpunkt ist.

4. Verfahren nach einem der Ansprüche 1 bis 3, wobei der obere Abregelpunkt (Bmax) bestimmt wird, indem ein theoretischer Abregelpunkt (BT) der Treibstoffrate eingestellt wird, der die Regelung des Turbotriebwerks beeinflussende Phänomene mit Ausnahme von Ungenauigkeiten der Messung der Treibstoffrate widerspiegelt.

5. Verfahren nach einem der Ansprüche 1 bis 4, wobei der zweite Schritt zur Steuerung umfasst:

   - eine Erhöhung des oberen Abregelpunkts,

- eine Erhöhung der Treibstoffrate, die in die Verbrennungskammer des Turbotriebwerks eingespritzt wird,
- eine Einwirkung auf zumindest eine variable Geometrie des Turbotriebwerks.

6. Verfahren nach Anspruch 5, wobei die zumindest eine variable Geometrie ein Ausströmventil des Kompressors des Turbotriebwerks umfasst.

7. Computerprogramm umfassend Anweisungen zur Ausführung der Schritte des Verfahrens zur Steuerung nach einem der Ansprüche 1 bis 6, wenn das Programm durch einen Computer ausgeführt wird.

8. Computerlesbarer Datenträger, auf dem ein Computerprogramm umfassend Anweisungen zur Ausführung der Schritte des Verfahrens zur Steuerung nach einem der Ansprüche 1 bis 6 gespeichert ist.

9. Vorrichtung zur Steuerung (2) eines Leerlaufschubs eines Turbotriebwerks (1), das in Bezug auf die Treibstoffrate mittels eines oberen Abregelpunkts zum Schutz gegen ein Pumpen eines Kompressors des Turbotriebwerks geregelt ist, wobei die Vorrichtung umfasst:

   - ein Modul zum Erhalt (2C) eines ersten Betriebspunkts (P1) des Turbotriebwerks an dem oberen Abregelpunkt entsprechend einem ersten Schubwert, wobei dieser obere Abregelpunkt eine zu geringe Schätzung der Treibstoffrate, die in die Verbrennungskammer des Turbotriebwerks eingespritzt wird, bei der Regelung des Turbotriebwerks berücksichtigt,
   - ein Steuermodul (2A), das dazu geeignet ist, das Turbotriebwerk zu steuern, um den ersten Betriebspunkt zu erreichen,
   - ein Überwachungsmodul (2B) des Turbotriebwerks, das dazu geeignet ist, ein Abdrehen des Kompressors zu erfassen,
   - Module (2C, 2A), die aktiviert werden, wenn ein Abdrehen durch das Überwachungsmodul erfasst wird:

      ○ eines zum Erhalt (2C) eines zweiten Betriebspunkts (P2) entsprechend einem zweiten Schubwert des Turbotriebwerks, der höher ist als der erste Wert und eine Spanne in Bezug auf den oberen Abregelpunkt garantiert, die bestimmt ist, um das Turbotriebwerk gegen ein Abdrehen des Kompressors zu schützen, und
      ○ eines zur Steuerung (2A) des Turbotriebwerks, um den zweiten Betriebspunkt zu erreichen.

10. Turbotriebwerk (1), umfassend eine Steuervorrichtung (2) nach Anspruch 9.

**Claims**

1. A method of controlling idling thrust from a turbojet (1) subjected to fuel flow rate regulation by means of a high limit value (Bmax) for providing protection against surging of a compressor of the turbojet, said method comprising:

   • an obtaining step (E10) for obtaining a first operating point (P1) of the turbojet on the high limit value corresponding to a first thrust value, said high limit value taking account of an underestimate of the rate at which fuel is being injected into the combustion chamber of the turbojet while regulating the turbojet;
   • a first turbojet control step (E20) for reaching the first operating point;
   • a monitoring step (E30, E40) for monitoring the turbojet in order to detect underspeed of the compressor; and
   • if underspeed is detected (E40):

      • an obtaining step (E10) for obtaining a second operating point (P2) that corresponds to a second thrust value from the turbojet greater than the first value, and that, relative to the high limit value (Bmax), guarantees a margin (Mdeviss) that is determined to protect the turbojet against underspeed of the compressor; and
      • a second turbojet control step (E50) for reaching the second operating point.

2. A method according to claim 1, wherein the protection margin (Mdeviss) against underspeed of the compressor takes account of overestimating the rate at which fuel is being injected into the combustion chamber of the turbojet while regulating the turbojet.

3. A method according to claim 1 or claim 2, wherein during the monitoring step (E30, E40), underspeed of the compressor is detected (E36) when a gradient of the compressor speed is negative (E32) for a fuel flow rate setpoint corresponding to the high limit value.

4. A method according to any one of claims 1 to 3, wherein the high limit value (Bmax) is determined by adjusting the theoretical limit value (BT) for fuel flow rate representing phenomena having an impact on regulating the turbojet, with the exception of inaccuracies in measuring the fuel flow rate.

5. A method according to any one of claims 1 to 4, wherein the second control step comprises:

• increasing the high limit value;
• increasing the flow rate at which fuel is injected into the combustion chamber of the turbojet; and
• acting on at least one variable geometry element of the turbojet.

6. A method according to claim 5, wherein said at least one variable geometry element comprises a handling bleed valve of the compressor of the turbojet.

7. A computer program including instructions for executing steps of the control method according to any one of claims 1 to 6 when said program is executed by a computer.

8. A computer readable data medium storing a computer program including instructions for executing steps of the control method according to any one of claims 1 to 6.

9. A control device (2) for controlling idling thrust from a turbojet (1) subjected to fuel flow rate regulation by means of a high limit value for providing protection against surging of a compressor of the turbojet, said device comprising:

• an obtaining module (2C) for obtaining a first operating point (P1) of the turbojet on the high limit value corresponding to a first thrust value, the high limit value taking account of an underestimate of the flow rate at which fuel is being injected into the combustion chamber of the turbojet while regulating the turbojet;
• a control module (2A) suitable for controlling the turbojet to reach the first operating point;
• a monitoring module (2B) for monitoring the turbojet and suitable for detecting underspeed of the compressor; and
• modules (2C, 2A) that are activated if underspeed is detected by the monitoring module:

• for obtaining (2C) a second operating point (P2) that corresponds to a second thrust value from the turbojet greater than the first value, and that, relative to the high limit value, guarantees a margin that is determined to protect the turbojet against underspeed of the compressor; and
• for controlling (2A) the turbojet to reach the second operating point.

10. A turbojet (1) including a control device (2) according to claim 9.

**FIG.1A**

**FIG.1B**

**FIG.2**

2A

2B

2C

**FIG.3**

4 5 6

7 8

---

Détermination des points de fonctionnement P1 et P2 —— E00

Obtention des points de fonctionnement P1 et P2 et stockage en mémoire —— E10

Pilotage du turboréacteur 1 pour atteindre P1 —— E20

**FIG.4**

Surveillance d'un dévissage —— E30

non

Détection d'un dévissage —— E40

oui

Pilotage du turboréacteur 1 pour atteindre P2 —— E50

FIG.5

FIG.6

**FIG.7A**

**FIG.7B**

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2992355